# EUROPÄISCHE PATENTANMELDUNG

(11) **EP 2 124 023 A1**
(43) Veröffentlichungstag der Anmeldung: **25.11.2009**
(21) Anmeldenummer: 08009188.7
(22) Anmeldetag: 19.05.2008
(51) Int. Cl.: G01F 23/00, H05K 7/14

(54) **Elektrisches bzw. elektronisches Füllstandsmessgerät**

(71) Anmelder: VEGA Grieshaber KG, 77709 Wolfach (DE)
(72) Erfinder: Becherer, Frank, 77716 Haslach (DE); Rauer, Winfried, 77716 Fischerbach (DE); Körnle, Ralf, 77736 Zell a.H. (DE)
(74) Vertreter: Göhring, Robert

(57) **Zusammenfassung**

Die Erfindung bezieht sich auf ein elektrisches bzw. elektronisches Füllstandmessgerät, das in einem Einschubgehäuse 24 angeordnet ist. Das Einschubgehäuse 24 ist mit einem Deckel 10 verschlossen. Dieser Deckel 10 ist mit einer als Abziehhilfe dienenden Griffleiste 11 ausgestattet, in welcher Zylinderstifte 12, 13 zur Verstellung von Potentiometern 32 bzw. Schaltern 33 drehbar angeordnet sind. Die elektrischen Bauelemente 32, 33 sind auf einer Leiterplatte 30 angeordnet, welche innerhalb des Deckels 10 gelegen ist.

## Beschreibung

Die Erfindung bezieht sich auf ein elektrisches bzw. elektronisches Füllstandsmessgerät, das in einem von einem Deckel verschlossenen Einschubgehäuse angeordnet ist.

Derartige Messgeräte müssen häufig dem Gehäuse entnommen werden, um zu einem späteren Zeitpunkt die Einstellungen in der Elektronik zu verändern oder einfach, um bestimmte Module zu Reparaturzwecken auszutauschen.

Der vorliegenden Erfindung liegt die Aufgabe zugrunde, das Gerät so zu gestalten, dass zum einen die Entnahme des Gerätes erleichtert und zum andern die Einstellung vereinfacht wird.

Zur Lösung dieser Aufgabe wird gemäß Anspruch 1 vorgeschlagen, am Deckel einer Elektronikhaltevorrichtung eine nach außen abstehende Griffleiste vorzusehen, welche einerseits als Abziehhilfe dient und in welche andererseits von außen zugängliche Stellglieder zur mechanischen Verstellung von innerhalb des Deckels befindlichen elektrischen Bauteilen angeordnet sind.

Solche Bauteile können gemäß Anspruch 2 z.B. Potentiometer, also Drehwiderstände, oder Drehschalter sein.

Als Stellglieder werden gemäß Anspruch 3 achsparallel zueinander in Ausnehmungen der Griffleiste drehbar angeordnete Zylinderstifte vorgeschlagen, die an ihren nach außen gelegenen Enden nach Art von Schrauben Schlitze aufweisen, so dass die Zylinderstifte mittels eines Schraubendrehers oder anderen Werkzeuges verstellt werden können.

Die genannten elektrischen Bauteile sind nach dem Vorschlag gemäß Anspruch 4 an einer Leiterplatte vorgesehen, welche innerhalb eines Deckels einer Haltevorrichtung angebracht ist.

Eine besonders einfache Montage ergibt sich nach dem Vorschlag gemäß Anspruch 5, nach welchem die elektrischen Bauteile auf der der Griffleiste zugewandten Seite der Leiterplatte angeordnet sind und Einsteckschlitze aufweisen, in welche die Stellglieder mit den Einsteckschlitzen entsprechenden Kupplungselementen kraft- und formschlüssig eingreifen.

Im Falle einer langgestreckten Griffleiste sind die Stellglieder gemäß Anspruch 6 in Reihe angeordnet. In diesem Fall kann der Deckel wenigstens ein sich parallel zu dieser Reihe erstreckendes Fenster aufweisen, in welchem von außen zugängliche Anschlusskontakte des Messgerätes gelegen sind.

Zur Vereinfachung von Montage bzw. nachträglicher Reparatur ist gemäß Anspruch 7 vorgeschlagen, die Leiterplatte mit den elektrischen Bauelementen an der Rückseite des Deckels lösbar zu befestigen, vorzugsweise zu verschrauben.

Der Gegenstand der Erfindung ist nachstehend anhand eines bevorzugten Ausführungsbeispiels, das in den Zeichnungen dargestellt ist, im Einzelnen erläutert.

### In den Zeichnungen zeigen:

- Figur 1: perspektivische Darstellung des Deckels,
- Figur 2: Schnitt längs der Linie II-II in Figur 1,

- Figur 3: Schnitt längs der Linie III-III in Figur 1,
- Figur 4: perspektivische Darstellung der Leiterplatte mit aufgesetzten Stellgliedern und
- Figur 5: Leiterplatte gemäß Figur 4 ohne die genannten Stellglieder.

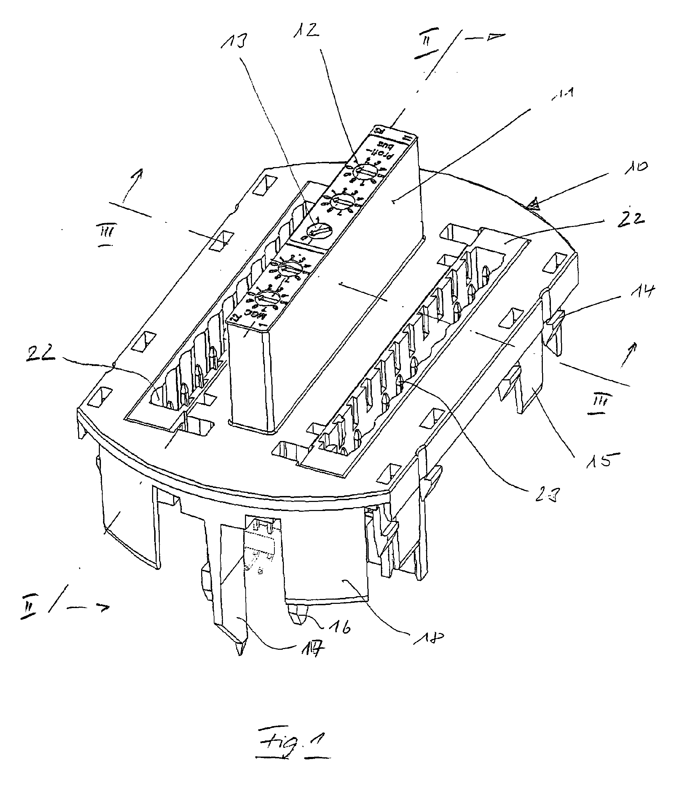

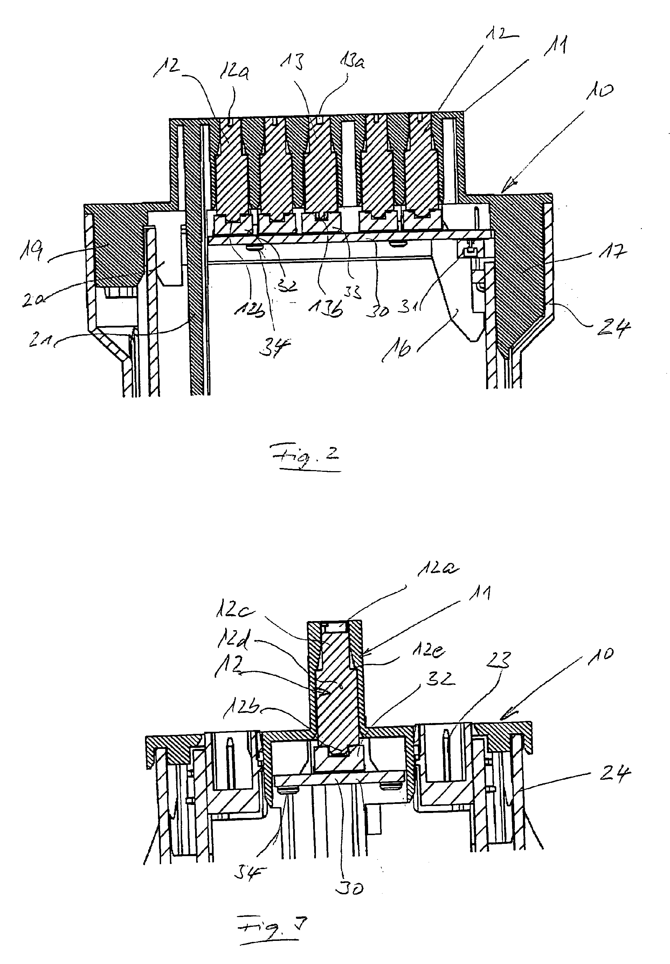

In Figur 1 ist lediglich der erfindungsgemäß gestaltete Deckel 10 dargestellt, der in ein in Figur 2 mit Ziffer 24 angedeutetes Gehäuse von oben einsetzbar ist. Das Gehäuse ist z.B. eine Haltevorrichtung aus Kunststoff für die Aufnahme einer Steuereinheit eines Füllstandmessgerätes. Diese Haltevorrichtung selbst kann über geeignete Führungsmittel in ein vorzugsweise aus Metall oder Kunststoff bestehendes Umgehäuse platziert werden.

Dieser Deckel 10 weist eine mittige angeordnete Griffleiste 11 auf, in welcher verdrehbare Stellglieder 12 und 13 in Reihe angeordnet sind. Der Deckel 10 weist sich parallel zur Griffleiste 11 erstreckende Fenster 22 auf, in welchen Anschlusskontakte der im übrigen nicht dargestellten Elektronik gelegen sind, so dass in diese Fenster nicht dargestellte Stecker eingesetzt werden können.

An den seitlichen Rändern des Deckels 10 sind verschiedene Rasthaken 14 sowie Führungsstege 15, 16, 17 und 18 vorgesehen, welche der Führung und Lagesicherung des Deckels 10 innerhalb des Gehäuses 24 dienen.

Anordnung und Gestaltung der Stellglieder 12, 13 sowie der mittels der Stellglieder 12, 13 zu betätigenden elektrischen Bauelemente 32 und 33 sind aus den Schnittdarstellungen gemäß Figur 2 und 3 ersichtlich.

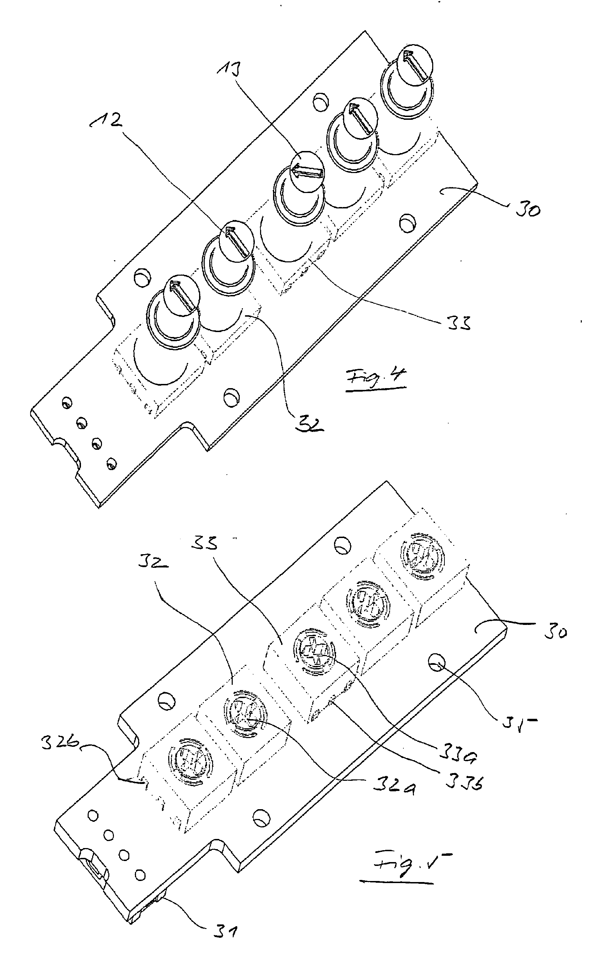

Die elektrischen Bauelemente, nämlich Potentiometer 32 und Drehschalter 33, sind auf einer innerhalb des Deckels 10 unterhalb der Griffleiste 11 mit Schrauben 34 befestigten Leiterplatte 30 angeordnet. Diese Bauelemente weisen auf ihren den Stellgliedern 12, 13 zugewandten Seite Kreuzschlitze 32a bzw. 33a auf, wie dies aus Figur 5 ersichtlich ist. In diese Kreuzschlitze 32a, 33a greifen die Stellglieder 12, 13 mit entsprechend ausgebildeten kreuzförmigen Kupplungsstegen 12b, 13b kraft- und formschlüssig ein, so dass die Potentiometer 32 bzw. der Drehschalter 33 durch Verdrehen der Stellglieder 12, 13 verstellt bzw. betätigt werden könne.

Auf ihrer in der Zeichnung oben gelegenen Außenseite sind die Stellglieder 12, 13 nach Art von Schraubköpfen mit Schlitzen 12a, 13a versehen, so dass diese mittels eines Schraubendrehers verstellt werden können.

Da die Stellglieder 12, 13, wie vor allem aus Figur 3 ersichtlich ist, ein oberes schlankeres Stiftoberteil 12c und ein unteres Stiftunterteil 12d mit größerem Querschnitt aufweisen, so dass sich ein als Anschlag dienender ringförmiger Absatz 12e ergibt, können diese unverlierbar in sich nach oben verjüngenden Ausnehmungen der Griffleiste 11 drehbar gelagert sein.

Nach Lösen der Schrauben 34 kann die Leiterplatte 30 mit den elektrischen Bauelementen 32, 33 entfernt werden, so dass auch die Stellglieder 12, 13 erforderlichenfalls herausgenommen und ausgetauscht werden können.

Der elektrischen Verbindung der Bauelemente 32 und 33 dient eine an der Rückseite der Leiterplatte 30 vorgesehene Anschlussklemme 31.

Die vergrößerten perspektivischen Darstellungen gemäß Figur 4 und 5 lassen Gestaltung und Aufbau der Leiterplatte 30 genauer erkennen.

In Figur 4 sind die an sich innerhalb der Griffleiste 11 drehbar gelagerten Stellglieder 12, 13 angedeutet, die in Figur 5 fehlen.

Auf der Leiterplatte sind die in Form von SMD (Surface Mounted Device) ausgebildeten Potentiometer 32 und der Drehschalter 33 angeordnet und mit seitlich vorgesehenen Kontakten 32b, 33b mit der gedruckten Schaltung der Leiterplatte 30 mechanisch und elektrisch verbunden.

### Bezugszeichenliste

- 10: Deckel
- 11: Griffleiste
- 12: Stellglied für Potentiometer
- 12a: Schlitz
- 12b: Kupplungssteg
- 12c: Stiftoberteil
- 12d: Stiftunterteil
- 12e: Absatz
- 13: Stellglied für Drehschalter
- 13a: Schlitz
- 14: Rastnase
- 15: Führungssteg
- 16: Führungssteg
- 17: Führungssteg
- 18: Führungssteg
- 19: Führungssteg

- 20: Führungssteg
- 21: Führungssteg
- 22: Fenster
- 23: Kontaktstifte
- 24: Gehäuse

- 30: Leiterplatte
- 31: Anschlussklemme
- 32: Potentiometer
- 32a: Einsteckschlitz
- 32b: Kontakte
- 33: Drehschalter
- 33a: Einsteckschlitz
- 33b: Kontakte

- 34: Schraube
- 35: Schraublöcher

## Patentansprüche

1. Elektrisches bzw. elektronisches Füllstandsmessgerät, das in einem Einschubgehäuse mit Deckel angeordnet ist,
**dadurch gekennzeichnet , dass** am Deckel (10) eine als Abziehhilfe dienende, nach außen abstehende Griffleiste (11) vorgesehen ist, in welcher von außen zugängliche Stellglieder (12, 13) zur mechanischen Verstellung von innerhalb des Deckels (10) befindlichen elektrischen Bauteilen (32, 33) angeordnet sind.

2. Elektrisches bzw. elektronisches Füllstandsmessgerät nach Anspruch 1,
**dadurch gekennzeichnet, dass** die elektrischen Bauteile Potentiometer (12) und/oder Drehschalter (13) sind.

3. Elektrisches bzw. elektronisches Füllstandsmessgerät nach Anspruch 1 oder 2,
**dadurch gekennzeichnet, dass** die Stellglieder achsparallel zueinander in Ausnehmungen der Griffleiste (11) drehbar angeordnete Zylinderstifte (12, 13) sind, die an ihren außen gelegenen Enden der Betätigung mittels eines Schraubdrehers dienende Schlitze (12a, 13a) aufweisen.

4. Elektrisches bzw. elektronisches Füllstandsmessgerät nach Anspruch 1, 2 oder 3,
**dadurch gekennzeichnet, dass** die elektrischen Bauteile an einer Leiterplatte (30) vorgesehen sind, welche innerhalb des Deckels (10) angebracht ist.

5. Elektrisches bzw. elektronisches Füllstandsmessgerät nach Anspruch 4,
**dadurch gekennzeichnet, dass** die elektrischen Bauteile (12, 13) auf der der Griffleiste (11) zugewandten Seite der Leiterplatte (30) angeordnet sind und Einsteckschlitze (32a, 33a) aufweisen, in welche die Stellglieder (12, 13) mit den Einsteckschlitzen (32a, 33a) entsprechenden Kupplungselementen (12b, 13b) kraft- und formschlüssig eingreifen.

6. Elektrisches bzw. elektronisches Füllstandsmessgerät nach einem der Ansprüche 1 bis 5,
**dadurch gekennzeichnet, dass** die Stellglieder (12, 13) in einer Reihe angeordnet sind und dass der Deckel (10) wenigstens ein sich parallel zu dieser Reihe erstreckendes Fenster (22) aufweist, in welchem von außen zugängliche Anschlusskontakte (23) des Messgerätes gelegen sind.

7. Elektrisches bzw. elektronisches Füllstandsmessgerät nach Anspruch 5 oder 6,
**dadurch gekennzeichnet, dass** die Leiterplatte (30) mit den elektrischen Bauelementen (12b, 13b) an der Rückseite des Deckels (10) vorzugsweise mit Schrauben (34) lösbar befestigt ist.
